# EUROPÄISCHE PATENTSCHRIFT

(11) **EP 0 569 932 B1**
(45) Veröffentlichungstag und Bekanntmachung des Hinweises auf die Patenterteilung: **15.11.1995**
(21) Anmeldenummer: 93107642.6
(22) Anmeldetag: 11.05.1993
(51) Int. Cl.: F16L 59/16

(54) **Armatur mit isolierendem Zwischenstück**
Fitting having an insulating intermediate piece
Robinetterie ayant une pièce intermédiaire isolante

(30) Priorität: 11.05.1992 DE 4215407
(43) Veröffentlichungstag der Anmeldung: 18.11.1993
(73) Patentinhaber: KSB Aktiengesellschaft, 67227 Frankenthal (DE)
(72) Erfinder: Garrigues, Jean-Claude, F-33140 Pont de la Maye (FR)

(56) Entgegenhaltungen:
- DE-A- 3 832 627
- DE-B- 1 551 591
- DE-U- 8 910 705
- FR-A- 2 050 064

## Beschreibung

Die Klimaanlagen von Gebäuden umfassen in der Regel Heißwassererzeuger und Kaltwassererzeuger, welche über einen Verteiler und ein Rohrleitungssystem die Zu- oder Abfuhr von Wärme aus Räumen von Gebäuden ermöglichen. Der Wärmeträgerstrom wird üblicherweise mit Armaturen geregelt. Um einen Energieverlust oder eine Auskondensation der in der Luft enthaltenen Feuchtigkeit an den kalten Stellen im Rohrleitungssystem zu vermeiden, sind diese Anlagen so gut wie möglich isoliert.

Für Rohrleitungssysteme ist eine Isolation weitgehend in Normen festgeschrieben und mit standardisierten Produkten durchzuführen. Was hingegen die zusätzlichen Teile wie Armaturen betrifft, welche in Form und Abmessung sehr stark voneinander abweichen, ist die Isolation sehr aufwendig. Bei Heiz- und Kühlkreisläufen ist daher der Gehäusehals der Armatur, an welchen üblicherweise ein Stellmechanismus über ein Übertragungselement auf den Absperrkörper der Armatur einwirkt, in der Regel nur teilweise isoliert und er ragt über die Isolation hinaus.

Für den Heizungskreislauf ist in der Heizungsanlagenverordnung lediglich eine bestimmte Stärke der Isolation vorgeschrieben, die Ausführung der Isolierung richtet sich aber nach den Bauformen der einzelnen Armaturen. Im Kühlkreislauf kondensiert der in Luft enthaltene Wasserdampf an den kalten Stellen des Rohrleitungssystems aus. Diese Stellen sind oftmals mangelhaft isolierte Bauteile, insbesondere Armaturen. Das Kondensat erhöht die Korrosionsgefahr der Armatur wie auch der Umgebung und ruft dann schnell einen für den ästhetischen Eindruck unangenehmen Eindruck eines verfallenen Zustandes der Anlage hervor. Der optische Eindruck ist aber bei für jedermann sichtbaren Armaturen ein nicht zu unterschätzendes Kriterium für die Beurteilung der Gesamtanlage.

Als Folgen einer mangelhaften Isolation des Rohrleitungssystems ergeben sich daher eine Erhöhung der Betriebskosten durch Energieverluste und höheren Wartungsaufwand sowie eine schnelle Verschlechterung des optischen Eindrucks bei den Armaturen.

DE-B- 1 551 591 und DE-U- 89 10 705 offenbaren eine Armatur, bestehend aus einem Gehäuse mit einer Durchflußöffnung, einem Absperrkörper und einem Stellmechanismus zur Betätigung des Absperrkörpers, welche an ihrem Gehäuse einen Hals, in welchem ein Übertragungselement geführt ist, mit Endflansch aufweist, wobei an dem Endflansch ein Zwischenstück angebracht ist.

Der innerbetriebliche Stand der Technik wird durch Absperrklappen gebildet, welche an ihrem Endflansch des Oberteils der Armatur eine Zwischenplatte aus thermisch isolierendem Material aufweisen, durch welche die Welle hindurchgeht und anschließend die Betätigungsvorrichtung mit der Welle verbunden wird (Prospekt "Absperrklappe BOAX-II"). Die Zwischenplatte ist fest mit dem Endflansch des Gehäuses verbunden. Um diese Armatur zu isolieren, wird die Isolation an die Zwischenplatte herangeführt und aufwendig abgedichtet. Die Anpassung der Isolation geschieht in aufwendiger Handarbeit für jede Armatur einzeln.

Das mit der Erfindung zu lösende Problem liegt darin, daß bei den bislang bekannten Armaturen eine Vollisolation nur sehr schwierig möglich ist. Der Erfindung liegt die Aufgabe zugrunde, eine Armatur zu schaffen, bei welcher eine Vollisolation einfach möglich ist.

Das Problem wird durch die in Anspruch 1 angegebene Lehre gelöst.

Der Vorteil gegenüber dem Stand der Technik besteht darin, daß in den Hohlräumen des Zwischenstückes aus einem Material geringer Wärmeleitfähigkeit die Luft als Isolator die Isolationswirkung erhöht und mit der Erstreckung des Zwischenstücks in Form einer Schürze über den Endflansch die Isolation sowohl oberhalb als auch unterhalb des Endflansches angebracht werden kann. Das Zwischenstück erstreckt sich mindestens so weit, daß eine thermische Isolation des Armaturengehäuses im Bereich des Halses problemlos am Zwischenstück möglich ist. Durch die übliche Abdichtung der Isolation an dem Zwischenstück wird auch der Luftaustausch von der in der Isolation befindlichen Luft und der Umgebungsluft verhindert.

Dank der erhöhten Isolationswirkung wird die Kondensation von Wasserdampf an dem Zwischenstück verhindert. Es bilden sich keine Rinnsale aus Kondensat, welche den ästhetischen Eindruck der Anlage durch Korrosionserscheinungen beeinträchtigen. Das Zwischenstück kann durch Normung seiner Außenabmessungen vereinheitlicht werden. Die Isolation kann durch die Standardisierung und Verwendung vorgefertigter Produkte vereinfacht werden und eine aufwendige Handanpassung entfällt. Die Anschlußstelle der Isolation an den Hals kommt so weit von dem Armaturengehäuse zu liegen, daß eine Benutzung der Betätigungsvorrichtung ohne Behinderung auch bei vollständiger Isolation der Armatur möglich ist.

Das Zwischenstück kann für Armaturen mit geradliniger oder mit drehender bzw. schwingender Bewegung des Abschlußkörpers verwendet werden.

Die Weiterbildung nach Anspruch 2 hat den Vorteil, daß eine bis auf einen Spalt vollständige Kapselung der Anschlußstelle der Betätigungsvorrichtung erreicht wird. Das Ringelement stützt sich am Zwischenstück ab und läßt auch dort nur einen Spalt offen.

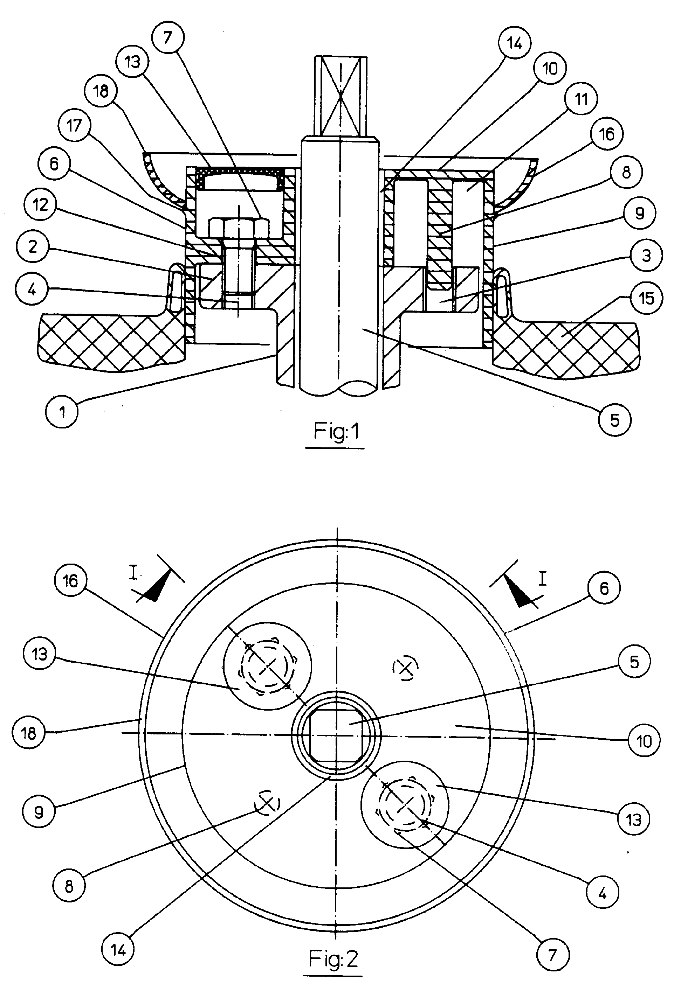

Ein Ausführungsbeispiel der Erfindung ist in der Zeichnung dargestellt und wird im folgenden näher beschrieben. Es zeigt die
- Fig. 1: das Zwischenstück im Längsschnitt I-I
- Fig. 2: das Zwischenstück in der Draufsicht.

An dem Hals (1) einer Armatur befindet sich ein Endflansch (2), welcher Bohrungen (3, 4) aufweist. Durch den Hals (1) wird eine Welle (5) oder eine Spindel zur Betätigung des Absperrkörpers geführt. Auf dem Endflansch (2) sitzt ein Zwischenstück (6) aus thermisch isolierendem Material. Das Zwischenstück (6) ist durch Schrauben (7) mit dem Endflansch (2) verbunden und durch Zentrierhilfen (8), welche in die Öffnung (3) des Endflansches (2) eingreift, gegen Verdrehung gesichert. Die Zentrierhilfen (8) sind über dem Umfang verteilt zwischen den Schrauben (7) angeordnet und über nicht dargestellte Rippen abgestützt.

Der äußere Mantel (9) des Zwischenstückes ist über den Endflansch (2) in Richtung Gehäuse schürzenartig verlängert. In anderer Richtung erstreckt es sich vom Endflansch (2) weg und schließt zwischen einer Deckscheibe (10) und dem Endflansch (2) einen Hohlraum (11) ein. Der Hohlraum (11) ist dort unterbrochen, wo die Schraube (7) angeordnet ist. Das Zwischenstück (6) ist an dieser Stelle so geformt, daß eine Auflagefläche (12) zwischen der Schraube (7) und dem Endflansch (2) entsteht. Mit einem Stopfen (13) kann die Öffnung für die Schraube (7) verschlossen werden.

Das Zwischenstück (6) weist an dem inneren Mantel (14) eine Durchlaßöffnung für die Welle (5) auf und umschließt die Welle (5) unter Beibehaltung eines Luftspaltes. Auf die Welle (5) wird eine Vorrichtung zum Einwirken auf die Welle, ein Hebel, ein Handrad oder ähnliches, gesetzt. An die äußere Mantelfläche (9) kann direkt die Isolation (15) angeschlossen und abgedichtet werden. Damit ist das Gehäuse der Absperrarmatur vollständig isoliert.

Zur Isolation der Verbindungsstelle Betätigungsvorrichtung / Zwischenstück kann ein vorstehendes Ringelement (16) am Zwischenstück angebracht werden. Das Ringelement wird über einen umlaufenden Vorsprung (17) am äußeren Mantel (9) abgestützt. Die Fläche (18) des Ringelementes bildet eine Art Dichtung mit einer entsprechenden Fläche der Betätigungsvorrichtung.

Die Welle (5) kann zu ihrer Isolation von der Betätigungsvorrichtung über eine Kupplung aus Material geringer Wärmeleitfähigkeit thermisch entkoppelt werden. Bei Armaturen mit steigender Spindel sind zu deren Isolation weitere Maßnahmen notwendig.

## Patentansprüche

1. Armatur, bestehend aus einem Gehäuse mit einer Durchflußöffnung, einem Absperrkörper und einem Stellmechanismus zur Betätigung des Absperrkörpers, welche an ihrem Gehäuse einen Hals (1), in welchem ein Übertragungselement (5) geführt ist, mit Endflansch (2) aufweist, wobei an dem Endflansch (2) ein Zwischenstück (6) aus einem Material geringer Wärmeleitfähigkeit angebracht ist, **dadurch gekennzeichnet,** daß das Zwischenstück (6) den Endflansch (2) mit seinem äußeren Mantel (9) schürzenartig in Richtung zur Durchflußöffnung umhüllt, wobei es sich zudem vom Gehäuse weg erstreckt und einen Hohlraum (11) aufweist, welcher von dem äußeren Mantel (9), einem das Übertragungselement (5) umhüllenden inneren Mantel (14), einer Deckscheibe (10) zur Verbindung dieser beiden Mäntel (9, 14) und der Oberseite des Endflansches (2) gebildet wird.

2. Armatur nach Anspruch 1, dadurch gekennzeichnet, daß die Armatur eine Betätigungsvorrichtung zur Einwirkung auf das Übertragungselement (5) aufweist, daß am Zwischenstück (6) ein vorstehendes Ringelement (16) angebracht wird und daß die Betätigungsvorrichtung mit einer Fläche zum Anschluß an die Fläche (18) des Ringelementes (16) versehen ist.

## Claims

1. Valve equipment comprising a housing and a passage opening, a valve member and an actuating mechanism for the actuation of the valve member, which on its housing has a neck (1), in which a transmission element (5) runs with a terminal flange (2), an intermediate member (6) of a material with a low thermal conductivity being mounted on the terminal flange (2), characterized in that the intermediate member (6) has its outer casing (9) surrounding the terminal flange (2) in the manner of a skirt and toward the passage opening, it furthermore extending away from the housing and having a cavity (11), which is formed by the outer casing (9) and inner casing (14) encircling the transmission element (5), a cover disk (10) for connecting such two casings (9 and 14) and the top side of the terminal flange (2).

2. Valve equipment as claimed in claim 1, characterized in that such valve equipment possesses a setting device for acting on the transmission element (5), in that on the intermediate member (6) a projecting annular element (16) is mounted and in that the actuating device is provided with a surface for the connection to the surface (18) of the annular element (16).

## Revendications

1. Dispositif de robinetterie, comportant un corps muni d'une ouverture de passage, un obturateur et un moyen de commande pour manoeuvrer l'obturateur, le dispositif de robinetterie ayant un col (1) logeant un organe de transmission (5) et étant muni d'une bride (2) , à la bride (2) étant arrangée une pièce intermédiaire (6) d'un matériau de faible conductibilité de chaleur, caractérisé en ce que la pièce intermédiaire (6) enveloppe, en manière d'une jupe, avec sa chemise extérieure (9) la bride (2) en s'étendant vers l'ouverture de passage, la pièce intermédiaire (6) s'étend en oûtre dans la direction opposée du corps et comporte un espace (11) limité par la chemise extérieure (9), une chemise intérieure (14) enveloppant l'organe de transmission (5), une disque de recouvrement (10) pour rélier les deux chemises (9,14) et une face supérieure de la bride (2).

2. Dispositif de robinetterie selon la revendication 2, caractérisé en ce, que le dispositif comporte un moyen de commande pour l'entraînement de l'organe de transmission (5), en ce que la pièce intermédiaire (6) comporte un anneau saillant (16) et en ce que le moyen de commande est muni d'une surface correspondante pour être raccorder à la surface (18) de l'anneau (16).
